# EUROPEAN PATENT APPLICATION

(11) **EP 0 985 341 A2**
(43) Date of publication of application: **15.03.2000**
(21) Application number: 99117729.6
(22) Date of filing: 08.09.1999
(51) Int. Cl.: A01K 1/015

(54) **Clumpable animal litter containing welan gum**

(30) Priority: 10.09.1998 US 150728
(71) Applicant: MARCAL PAPER MILLS, INC., Elmwood Park, NJ 07407 (US)
(72) Inventor: Knapick, Edward G., Ogdensburg, New Jersey 07439 (US); Willemsen, Brent, Westfield, New Jersey 07090 (US); Wolfer, Ernest P., Allendale, New Jersey 07401 (US)
(74) Representative: Grünecker, Kinkeldey, Stockmair & Schwanhäusser Anwaltssozietät

(57) **Abstract**

A particulate animal litter including substrate particles and welan gum is described. The welan gum is present in the animal litter in an amount sufficient to cause, upon wetting, agglomeration of the animal litter into a mass of sufficient size and sufficient cohesive strength to be easily removed from a litter box. Preferably, the substrate particles are granules formed of materials obtained as coproducts from a wastepaper recycling process. A method of making the clumpable animal litter is also described.

## Description

### Field of the Disclosure

The present invention relates to clumpable animal litter, and more particularly to clumpable animal litter which uses welan gum as a clumping agent. In a preferred embodiment, the invention relates to a clumpable animal litter which is non-dusting and flushable of welan gum and granules formed from materials obtained as coproducts from a wastepaper recycling process.

### Background of the Disclosure

Various clumpable and non-clumpable animal litters have been developed over the years. Clumpable animal litters typically contain a water swellable clay, such as bentonite. See, e.g., U.S. Patent No. 5,503,111. Water swellable clays have the advantage of forming strong clumps upon wetting with animal urine, however, these clumps do not break up in water with agitation and would clog plumbing if flushed down a household toilet.

Other known animal litters employ absorbent substrate particles and a clumping agent. Known clumping agents include guar gum, locust bean gum, xantham gum, alginates, starches, cellulosic ethers and water soluble polymers. In this regard, U.S. Patent No. 5,609,123 summarizes various clumping agents.

Typically, the absorbent substrate particles are inexpensive clays or diatomaceous earth. Both swelling and non-swelling clays have been incorporated into clumpable animal litters. U.S. Patent No. 5,359,961 discloses non-swelling clay substrates and U.S. Patent No. 5,241,291 discloses swelling clays. However, it should be noted that swelling clays are normally used without clumping agent.

Use of swelling clays have the above-described problem of being non-flushable. The other substrate particles employed, including the granular clay based materials, are problematic because they create significant amounts of dust during manufacture, shipment and use.

In view of these concerns, there is currently a need for an animal litter that (1) forms clumps that are easily removed from a litter box, (2) is non-dusting, and (3) is flushable.

### Summary of the Disclosure

The present invention relates to a particulate animal litter including substrate particles and welan gum. The welan gum is present in the animal litter in an amount sufficient to cause, upon wetting, agglomeration of the animal litter into a mass of sufficient size and sufficient cohesive strength for physical removal from a litter box.

The present invention also relates to a method of making particulate animal litter including substrate particles and welan gum by mixing the substrate with welan gum to form a coating of welan gum on at least a portion of the substrate particles. The welan gum is mixed with the substrate particles in an amount so that upon wetting, the animal litter clumps into a mass of sufficient size and sufficient cohesive strength for physical removal from a litter box.

In yet another embodiment, the present invention relates to the use of granules made from materials obtained as coproducts from a wastepaper recycling process and a clumping agent to form a clumpable cat litter.

In a preferred embodiment, the invention relates to clumpable and flushable animal litter including welan gum and granules made from materials obtained as coproducts from a wastepaper recycling process.

### Description of the Drawing

A preferred embodiment of the invention is illustrated in the accompanying drawings, in which:

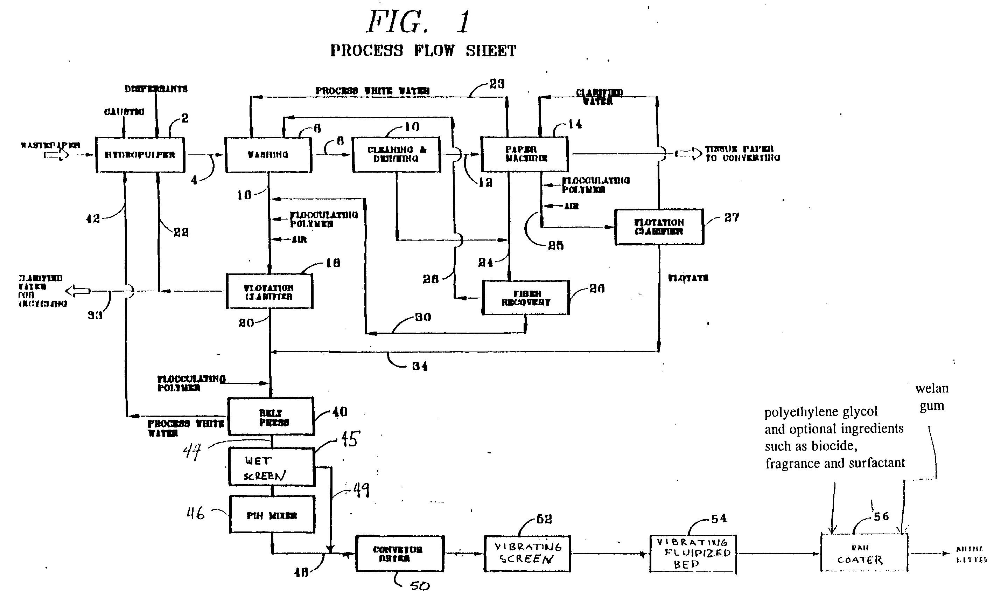

Fig. 1 is a schematic view of a preferred process and apparatus for recovering the papermaking fibers and manufacturing the animal litter according to the present invention.

### Detailed Description

Preferably, the animal litter of the present invention employs welan gum in an amount sufficient to cause, upon wetting, agglomeration of the animal litter into a mass of sufficient size and sufficient cohesive strength for physical removal from a litter box. The welan gum is preferably present in an amount between about 0.25 and about 5.0 wt%, more preferably between about 1.0 and about 2.0 wt% based upon the weight of the substrate particle.

The welan gum may be incorporated into the animal litter by mixing the welan gum with the substrate particles in a manner sufficient to cause the welan gum to coat the substrate particles.

The welan gum employed as the clumping agent in the present invention should provide tackiness to the animal litter in a salt-containing aqueous medium. Preferably, higher grade welan gums are employed. More preferably, fine-grained welan gums having particles that will pass through a 200 mesh screen are used since they offer the best clumping properties. Low grade welan gums or welan gums that contain, for example, protein or xanthan gum impurities may be used but are less preferable because they may not provide sufficient tackiness in a salt-containing aqueous media. Such welan gums include KELCO EX 6454 (which is a mixture of protein and welan gum) and KELCO W-Gum (which is a mixture of welan gum and xanthan gum). If low grade or low purity welan gums are employed, the resultant clump may not have sufficient cohesive strength for easy removal from a litter box. Thus, it is preferred that such low grade welan gums not be employed. Welan gum KELCO K1C376 is a most preferred welan gum because of its high purity and absence of proteins and xanthan gum.

In order to cause the welan gum to sufficiently coat the substrate particles, the substrate particles can first be wetted with a liquid prior to mixing with the welan gum. The liquid used for wetting the substrate particles can be any liquid which is inert to the substrate particles and which does not substantially dissolve the welan gum. Examples of useful wetting liquids include glycols, preferably polyethylene glycol. When polyethylene glycol is used as the liquid, it is added in an amount of from about 0.5 to about 12 wt%, preferably from about 2 to about 10 wt% based upon the weight of the substrate particles. Most preferably, a deodorized polyethylene glycol such as a food grade glycol is employed.

The substrate particles may be mixed with the wetting liquid in any suitable mixer. The preferred mixer is an inclined rotating pan. The wetted substrate particles can be mixed with the welan gum in any known mixer, however, mixing in an inclined rotating pan is preferred. It would be even more preferred if both wetting and coating operations could occur in a single pan which has dual interior rings.

Optionally, the animal litter further comprises a surfactant. The surfactant aids wetting of the substrate particles by animal urine so that the animal litter will quickly absorb the animal urine. The surfactant can be any surfactant that increases the wetting of the animal litter by aqueous solution. In this regard, SURFONIC™ L24690 (a linear hydroxyl methoxylated surfactant sold by Huntsman Chemical) works to cause wetting of the substrate particles by an aqueous solution such as animal urine.

If used, the surfactant is typically added to the animal litter in an amount sufficient to hasten the wetting of the animal litter by the animal urine. Preferably, the surfactant is added in amount between about 0.1 and 3 wt%, preferably between, about 0.25 and 0.5 wt% based upon the weight of the substrate particles. The surfactant is preferably incorporated into the animal litter while the substrate particles are wet by dripping the surfactant into a mixer containing the wet granules.

The substrate particles may be any known animal litter substrate particles such as swelling clays, non-swelling clays and diatomaceous earth. Examples of swellable clays are smectite clays such bentonite (western), hectorite, beidelite, montmorillonite, nontronite and saponite. Examples of non-swelling clays include bentonite (eastern) and kaolin clay. Non-swelling clays are preferred because they are flushable. Other possible substrate particles include wood chips, wood shavings, wood flour, sawdust, straw, shredded paper, cloth, alfalfa, cotton, sand, hard ground corn husks, ground sugar cane, lignocellulose, calcium silicate and calcium sulfate.

Most preferably, the substrate particles are granules formed from materials obtained as coproducts from a wastepaper recycling process. These granules are highly attrition resistant, and are therefore non-dusting. Further, the use of these granules in combination with welan gum results in an animal litter that forms a mass upon wetting with urine that has a sufficient strength and size to be easily removed from a litter box. However, the clumped animal litter granule disintegrates with agitation upon immersion in water. Thus, the clump can be disposed of in a household toilet without clogging the plumbing. In other words, the welan gum/granule mixture is flushable.

The present invention also contemplates the use the above-described granule in combination with any known clumping agents. Examples of suitable clumping agents include xanthan gum and methyl cellulose. These clumping agents may be added to the granules in an amount sufficient to cause agglomeration of the particles when wetted into a mass of sufficient size and cohesive strength to be easily removed from a litter box.

An example of a granule composition obtainable from the recycled paper is as follows:
- from about 50 to about 65 wt%, or from about 55 to about 60 wt% organic materials including cellulose fibers;
- from about 15 to about 40 wt%, or from about 20 to about 35 wt% kaolin clay;
- from about 5 to about 30 wt%, or from about 10 to about 20 wt% calcium carbonate;
- from about 0.5 to about 4.0, or from about 1 to about 3 wt% titanium dioxide; and
- less than 10 wt%, or less 5 wt% by weight water.

A method of obtaining an animal litter is described below. Other such granules are described in U.S. Patent No. 5,728,270, the contents of which are hereby incorporated by reference. The granules produced by that process have a high absorbency toward liquids. Their composition by weight, is approximately 50% inorganic fillers (kaolin clay, calcium carbonate, titanium dioxide) and 50% organic (cellulose fines, starches, tannins, lignin, etc.). Less than 10% of the material is in the form of fibers having a length that is sufficient to be retained on a 100 mesh screen in accordance with the TAPPI 233 procedure. Accordingly, as used in this description, fibers that are suitable for papermaking as referred to in this Specification are fibers that would be retained on a 100 mesh screen.

The formation of granules from materials obtained as coproducts in a wastepaper recycling process utilizes paper that is collected from offices or other sources that contain primarily recyclable paper grades, including magazines (with clay and calcium carbonate based coatings or fillers) and printed paper such as paper used for laser printing, photocopying and other paper.

Referring to Fig. 1, wastepaper is supplied to a hydropulper 2 along with water, caustic agents, such as sodium hydroxide, and dispersants to separate the fiber from the other components of the wastepaper. Plastics, debris and other foreign objects are removed by conventional means. The pulp slurry from the hydropulper, which contains more than 95% water, passes through a pipe 4 to a washer 6 where several conventional washing steps are performed. In the washer 6, the slurry flows over wire screens where fibers useful for papermaking pass across the screens and the secondary stream passes through the screens and is conducted out of the washer through a pipe 16. The screens have slotted openings of about 100 to 300 microns in width. Preferably, the screens are semi-cylindrical and the slurry is sprayed tangentially onto the screens. Fibers suitable for papermaking pass across the surface of the screens, while small particles, such as kaolin clay, cellulose fines and other suspended solids pass through the screens. Some of the fibers may also pass endwise through the screens. The papermaking fibers from the surface of the screen are included in the accepts stream that is pumped through the pipe 8 and are subject to further cleaning, deinking and processing, indicated at 10, before being supplied through a pipe 12 to a papermaking machine 14.

The secondary stream from the washer 6 is in the form of a slurry containing less than 1.5% solids. Typically, 35-50% by weight of the solids are fillers such as kaolin clay, calcium carbonate and titanium dioxide. The remaining 50-65% is mostly sugars, tannins, lignins, and cellulose fiber or fines, which is referred to generally herein as cellulosic material. The cellulosic material is of a size that would pass through a 100 mesh screen. This slurry, which contains at least 98.5% water, is conducted through the pipe 16 to a dissolved air flotation clarifier 18. Suitable clarifiers are commercially available (e.g., Supracell from Krofta, or Deltafloat from Meri). A flocculating polymer, such as DREWFLOC™ 442 from Ashland Chemical Co., or Calgon TRP™ 945, is added to the secondary stream in the pipe 16 before the slurry enters the clarifier. Air is injected into the feed stream of the clarifier 18. The slurry fills the clarifier 18, and the flocculated suspended solids float on the air bubbles to the surface of the clarifier. At this point, the mat of solids, which has a consistency of 3 - 9%, is skimmed or raked off the surface and removed from the clarifier through the pipe 20. The clarified water from the clarifier 18 is conducted back into the hydropulper 2 through the pipe 22 to be reused and a portion of the clarified water is recycled via pipe 33 to other places in the mill.

Nearly all unscreened mill process effluents that contain papermaking fibers are treated in a fiber recovery unit 26. Here the stream passes through screens that separate the papermaking fibers from fillers such as kaolin clay, cellulose material, sugars, lignins, tannins, etc., in a manner similar to the washer 6. This effluent includes some reject water streams, dumping or spills from pulp and paper chests, plant wash-ups, etc., indicated as stream 24 in Fig. 1. Previously, this effluent would have been discharged to a sewer. Papermaking fibers are returned through pipe 28 from the fiber recovery unit 26 to the washer 6. Pipe 30 conducts the secondary stream from the fiber recovery unit 26 to the clarifier 18.

The white water stream 25 from the papermaking machine is supplied to another flotation clarifier 27 where the flocculated suspended solids are removed in the same manner as in the clarifier 18. Process white water stream 23 is returned to the washer 6.

The stream passes out of the flotation clarifier 18 through a pipe 20, a flotate is added through pipe 34, and a second polymer (such as DREWFLOC™ 453 from Ashland Chemical Co.) is added to the slurry to cause the solids to dewater as the slurry enters a belt press 40. The belt press can be any one of the commercially available units (e.g., Kompress Belt Filter Press, Model GRS-S-2.0 from Komline Sanderson). At the outlet of the belt press, the filter cake contains 35-40% solids. Process white water from the belt press is returned to the hydropulper 2 through the pipe 42.

If a filter cake having a higher solids content is desired, a screw press may be used after the belt press, or instead of the belt press. Alternatively, a belt press with compressive rolls can be employed. The filter cake would pass through the nip between the rolls for additional dewatering. These arrangements can be used to produce a filter cake having a solids content of up to 55%.

The filter cake from the belt press 40 is conveyed by a screw conveyor 44 to an optional screen separator 45 and then to a pin mixer 46 (such as the Turbulator which was available from Ferro-Tech).

The screen separator 45 allows for wet screening of the material from the screw conveyor 44. The screen separator 45 (desirably manufacturer by MINOX as its MTS600 Tumbler Screen Machine) uses an orbital rather than a simple rotary motion to separate out particles of desired size which can go directly to a dryer from remaining particles that go to the pin mixer 46 which puts the remaining particles into a desirable size. By removal of this material using air knives which are part of screen separator 45 to prevent screen blinding, and feeding it directly to dryer 50 through line 49, the pin mixer 46 may be operated with less load. Desirably, wet particles which after drying are a minus 16-mesh material are screened off and fed directly to the dryer. If the pin mixer 46 includes multiple stages, then a separate wet screening apparatus may be used before each stage of the pin mixer.

The pin mixer has a cylindrical shell and a rotatable shaft mounted on the central axis of the shell. The shell is stationary and is supported on a frame so that the central axis of the shell is horizontal. The shaft has radial pins that are spaced about 1/8" from the interior wall of the shell. Pieces of the filter cake from the conveyor 44 are deposited in the shell at one end of the shell. The rate of filling of the shell should be adjusted so that the cake material occupies only about 2-25% of the volume of the shell. By maintaining a low density in the pin mixer 46, the filter cake is broken up by the rotating pins so that individual granules are separated as the material progresses from the inlet of the pin mixer to the outlet. It has been found that the pin mixer 46 produced optimum size particles for use as substrates in animal litter by running in the middle of the speed range, which is at 1500-4500 feet per minute tip speed of pins. Higher speeds give larger particles. Lower speeds yield a larger variability in sizes, with no net increase in smaller sized granules. When operating the mixer with a partially filled chamber in the middle of its speed range, the pin mixer 46 reduces the size of the particles as compared to the size of the particles that are discharged from the screw conveyor 44 or the wet screen 45. An example of a size distribution of granules obtained from the pin mixer which can be used for animal litter is as follows:
about 0.1% are retained on a 16 mesh screen;
about 21% are retained on a 20 mesh screen;
about 78.8% are retained on a 60 mesh screen; and
about 0.1% pass through a 60 mesh screen.

If surfactant is desired in the animal litter, it may be added to the granule in the pin mixer, typically by dripping an appropriate amount into the pin mixer.

Other additives may be added at this point (e.g., to increase density or absorbency) but it is important not to significantly increase the water content of the press cake since this would cause the particles to agglomerate, yielding a larger than desirable particle size and a less absorbent product. Operating the pin mixer in this fashion allows for uniform densification of the granules.

It has been found that backmixing dried granules with the wet feed as far upstream from the pin mixer as possible leads to a smaller, denser granule. In this regard, dried granules may be added just after the belt press 40. Preferably, up to 50% by weight of the dried granules can be added. No additional binders are necessary since the matrix produced by the kaolin clay, along with the lignin, tannin, starch and short fibrils in the feedstock, serve as the binder for the granules. The resulting open pore structure yields an absorbent irregular particle.

After the pin mixer 46 or wet screen 45, the granules move preferably under the force of gravity, onto a swing conveyor 48, and from the swing conveyer 48 onto the belt of a conveyor dryer 50. Any dryer can be used, such as a National three-stage conveyor dryer. The belt is porous and a fan blows hot air through the belt to dry the granules. The velocity of the air flow is sufficiently low to avoid movement of the granules on the belt. At the outlet, the granules have a minimum solids content of 90% by weight, and preferably greater than 95%.

Vibrating screens 52, such as manufactured by Rotex, are used to classify the material by size according to product specifications.

The granules obtained from the vibrating screen 52 process contain approximately 50-65% by weight of organic materials, such as cellulosic fines, starches, tannins and lignins. The granules preferably contain mostly materials that would pass through a 100 mesh screen. The inorganic fillers comprise about 35-50% by weight of the granules and are made up primarily of kaolin clay, calcium carbonate and titanium dioxide. The granules have an irregular, generally spherical shape. The granules from the conveyor dryer 50 vary in size. Typically, about 0.1% will be retained on a 16 mesh screen, about 21% will be retained on a 20 mesh screen, about 78.8% will be retained on a 60 mesh screen, and about 0.1% will pass through a 60 mesh screen. The granules have a bulk density of about 15-40 lb./cu. ft. desirably 20-35 lb./cu. ft. Thus, the granules utilized for the animal litter of the present invention preferably have a mesh size range of 16 to 60 mesh. In other words, the preferred substrate particles of the present invention have a particle size of 250 to 1190 µm.

Vibrating fluidized bed apparatus 54, such as manufactured by Witte (Model #448-S), is desirable for removing small particles or fibers in loose contact with the granules. These particles are removed in an air stream blow upward through a fine slotted bed. The slots are desirably 100 - 150 microns.

To form the preferred animal litter of the present invention, the sized granules from vibrating fluidized bed 54 travel to one or more inclined rotary open shallow pan coaters 56 (or other coater or coaters known to those skilled in the art) where the granules are wetted with polyethylene glycol and the wetted granules are mixed with powdered welan gum. The welan gum coats the surface of the granules due to its interaction with the polyethylene glycol. The finished animal litter is then removed from the pan coater 56.

The animal litter obtained from the granular material according to the present invention is able to withstand agitation such as might occur during shipment, handling, and storage. Resistance to attrition of the granules is between 95 and 100%. This percentage is based on the following test procedure. A weight of 75 grams of sample is shaken on a limiting screen for ten minutes and 50 grams of the material retained is then shaken in a pan for ten minutes with ten steel balls (5/8" in diameter). The entire sample is then shaken on the limiting screen for ten minutes. The percentage of the original 50 grams retained on the limiting screen is the resistance to attrition cited above. Granular material according to the present invention has been found to generally have a pH between 8.5 - 9.4.

The animal litter employing the granules made from recycled paper according to the present invention is adapted to absorb animal urine to desired degrees as a function of percentage of weight of the granules as well as to clump in a manner so that the clumps are easily removed from a litter box.

It has also been found that the particles produced using the pin mixer have less tendency to produce dust during the treatment and storage of the dry particles than naturally occurring clay products.

The animal litter may contain other conventional additives such as pigments, dyes, biocides, disinfectants, fragrances and deodorizers. Preferably, the granule contains one or more fragrances such as fragrance 4745 from Intarome Corp. and one or more biocides such as TEKTAMER™ 38 (made by Calgon Corp.). Desirably, the animal litter is treated with a combination of polyethylene glycol, biocide and fragrance. In a preferred embodiment, a surfactant is added to the glycol either before or simultaneously with the biocide and fragrance. This sequence of mixing allows for the production of a stable emulsion which may be applied in one step in the pan coater 56. However, the fragrances or biocide may be added in a separate step either before or after treating with either the glycol or the Welan gum.

While this invention has been illustrated and described in accordance with preferred embodiments, it is recognized that variations and changes may be made therein without departing from the invention as set forth in the claims.

### Procedures Used in the Examples:

### Animal Litter Formation:

In each of the following examples, animal litters were prepared using granules made from recycled paper as follows. To a pin mixer that was forming granules from recycled paper, 10 lbs surfactant (SURFONIC™ L24690) was added per ton recycled paper granule.

The surfactant treated granules were then dried. The granules used for preparing the animal litters typically exhibit the following particle size analysis (although some minor variation may have occurred from one animal litter to next):
0.1% were retained on a 16 mesh screen;
21.0% were retained on a 20 mesh screen;
78.8% were retained on a 60 mesh screen; and
0.1% passed through a 60 mesh screen.
The granules were then sprayed with polyethylene glycol in a rotating pan agglomerator using about 8 wt% polyethylene glycol based upon the weight of the recycled paper granules. The clumping agent was then added to the polyethylene treated particles at a rate 35 lbs clumping agent per ton of granule. The clumping agent/granule mixture was shaken in a glass jar to coat the granules with the clumping agent in order to form an animal litter.

### Clump Strength Testing:

The animal litters were tested for clumping ability as follows. Approximately 150 grams of animal litter were placed in a cup. After making a slight indentation, 10 milliliters of distilled water or synthetic cat urine were added.

After waiting a specified time, the formed clump was picked up with a spoon and dropped on a table from a height of one foot. A qualitative judgement of the clump strength was then made using the following scale:
- 1: Clump does not break;
- 1.5: Clump tears but does not break;
- 2: Clump breaks into two pieces;
- 2.5: Clump breaks into 3-4 pieces;
- 3: Clump breaks into 5-6 pieces;
- 3.5: Clump breaks into 7-10 pieces; and
- 4: Clump has no strength.

The synthetic cat urine had the following composition:
0.48% potassium chloride
0.78% sodium phosphate dibasic
5.44% urea
93.33% distilled water
The pH of the synthetic cat urine was adjusted to 6.5 by the addition of sulfuric acid.

### Example I (Testing Using Water):

As initial background testing, various animal litters were made as per the above description of "Procedures Used in the Examples." Water was used to clump the animal litter and the clumps were allowed to set for ten minutes before clump strength testing.

**Table I**

| Clumping Agent | Clump Strength Using Water After 10 Minutes |
|---|---|
| Methocellulose (Methocel-A15) | 4 |
| Methocellulose (Methocel-K4M) | 4 |
| Methocellulose (Methocel-A4M) | 3.5 |
| Methocellulose (Methocel-J75M5-N) | 4 |
| Methocellulose (Methocel-856-N) | 1.5 |
| Guar Gum (Lycoide 260) | 4 |
| Polyacrylamide | 4 |
| Sodium silicate N | 4 |
| Sodium silicate B50 | 4 |
| Sodium silicate D | 4 |
| Caase sealing glue | 4 |
| Ply bonding glue | 4 |
| Xanthan Gum (EX7874) | 4 |
| Xanthan Gum (7875) | 3.5 |
| Alginate (Kelvis) | 2 |

Thus, of the initial tests in water, alginate and methocellulose 856-N showed the best clumping properties.

### Example II (Clumping Using Water and Synthetic Cat Urine):

Animal litters were prepared according to the above description of "Processes Used in the Examples" using guar gum, xanthan gum, alginate (KELVIS), two types of methocellulose (856-N and A 14 LV PREM), and three types of welan gums (Kelco K1C376, W-gum and EX-6454) as clumping agents. Clumps were formed using distilled water or synthetic cat urine as per the above clumping test method.

The amount of time it took for the animal litter to absorb the water or synthetic cat urine was measured. Further, the clump strength was measured after the clumps were allowed to set for 2 minutes, 10 minutes and two hours using the testing method described above. Table II reports the results for tests using water and Table III reports the results for the tests using synthetic cat urine.

**Table II**

| | | Clumping Strength Using Water | | |
|---|---|---|---|---|
| Clumping Agent | Absorption time | 2 minute drop test | 10 minute drop test | 2 hour drop test |
| Guar Gum | 1 sec | 4.0 | 4.0 | 2.5 |
| Methocellulose (METHOCEL™ 856-N) | 1 sec | 1.5 | 1.5 | 1.5 |
| Methocellulose (A 15LV PREM) | 1 sec | 4.0 | 4.0 | 4.0 |
| Alginate (KELVIS) | 2 sec | 1.5 | 1.5 | 1.5 |
| Xanthan Gum (KELCO K9A48) | 30 sec | 2.0 | 2.0 | 2.0 |
| Welan Gum (KELCO K1C376) | 1 sec | 2.0 | 1.5 | 1.5 |
| Welan Gum¹ (KELCO W-Gum) | 1 sec | 4.0 | 4.0 | 4.0 |
| Welan Gum² (KELCO EX 6454) | 1 sec | 4.0 | 4.0 | 4.0 |

| | | | | |
|---|---|---|---|---|
| ¹KELCO W-Gum contains a mixture of welan gum and xanthan gum. | | | | |
| ²KELCO EX 6454 contains a mixture of protein and welan gum. | | | | |

**Table III**

| | | Clumping Strength Using Synthetic Cat Urine | | |
|---|---|---|---|---|
| Clumping Agent | Absorption time | 2 minute drop test | 10 minute drop test | 2 hour drop test |
| Guar Gum | 1 sec | 4.0 | 3.0 | 2.0 |
| Methocellulose (METHOCEL 856-N) | 1 sec | 1.5 | 1.5 | 1.5 |
| Methocellulose (A 15LV PREM) | 1 sec | 4.0 | 4.0 | 4.0 |
| Alginate (KELVIS) | 2 sec | 4.0 | 3.5 | 4.0 |
| Xanthan Gum (KELCO K9A48) | 1 sec | 3.0 | 2.5 | 2.5 |
| Welan Gum (KELCO K1C376) | 1 sec | 4.0 | 2.5 | 1.5 |
| Welan Gum (KELCO W-Gum) | 1 sec | 4.0 | 4.0 | 3.5 |
| Welan Gum (KELCO EX 6454) | 1 sec | 4.0 | 4.0 | 4.0 |

Unexpectedly, alginate which showed sufficient clump strength in water, failed to create adequate clumps using synthetic urine. By comparison, welan gum (Kelco K1C376) showed good clumping properties in both water and synthetic cat urine.

Moreover, KELCO K1C376 was far superior to the other two welan gums. KELCO K1C376 is a fine grained (i.e. less than 200 mesh) welan gum and showed improved clumping ability when compared to KELCO W-Gum and KELCO EX 6454. KELCO W-Gum is a mixture of welan gum and proteins, and welan gum "KELCO EX 6454" is a low grade gum containing substantial xanthan gum impurities.

## Claims

1. A particulate animal litter comprising substrate particles and welan gum in an amount sufficient to cause, upon wetting, agglomeration of the animal litter into a mass of sufficient size and sufficient cohesive strength for physical removal from a litter box.

2. The animal litter of claim 1, wherein the welan gum is present in an amount between about 0.25 and about 5.0 wt% based upon the weight of the substrate particles.

3. The animal litter of claim 2, wherein the welan gum is present in an amount between about 1.0 and about 2.0 wt% based upon the weight of the substrate particles.

4. The animal litter of claim 1, wherein the welan gum comprises particles that pass through a 200 mesh screen.

5. The animal litter of claim 1, wherein the substrate particles comprise granules formed from materials obtained as coproducts from a wastepaper recycling process.

6. The animal litter of claim 5, wherein the granules comprise:
- from about 50 to about 65 wt% organic materials including cellulose fibers;
- from about 15 to about 40 wt% kaolin clay;
- from about 5 to about 30 wt% calcium carbonate;
- from about 0.5 to about 4.0 titanium dioxide; and
- less than 10 wt% by weight water.

7. The animal litter of claim 6, wherein the granules comprise:
- from about 55 to about 60 wt% organic materials including cellulose fibers;
- from about 20 to about 35 wt% kaolin clay;
- from about 10 to about 20 wt% calcium carbonate;
- from about 1 to about 3 wt% titanium dioxide; and
- less than 5 wt% by weight water.

8. The animal litter of claim 1, wherein the substrate particles are irregularly shaped generally spherical granules containing about 50-65% organic solids and about 35-50% inorganic solids, including kaolin clay calcium carbonate and titanium dioxide, and having a substantially uniform density throughout.

9. The animal litter of claim 8, wherein the granules have a particle size of about 250 to about 1190 µm.

10. The animal litter of claim 8, wherein the organic solids comprise less than ten percent fibers that would be retained on a 100 mesh screen.

11. The animal litter of claim 8, wherein the granules have a porous outer surface.

12. The animal litter of claim 8, wherein the granules have a resistance to attrition of at least 95%.

13. The animal litter of claim 8, wherein the granules have a bulk density of about 15 to about 40 lb./cu.ft.

14. The animal litter of claim 1, further comprising a glycol.

15. The animal litter of claim 14, wherein the glycol is polyethylene glycol.

16. The animal litter of claim 15, wherein the polyethylene glycol is present in the amount of from about 0.5 to about 12 wt% based upon the weight of the substrate particles.

17. The animal litter of claim 16, wherein the polyethylene glycol is present in the amount of from about 2 to about 10 wt% based upon the weight of the substrate particles.

18. The animal litter of claim 1, further comprising a surfactant.

19. The animal litter of claim 18, wherein the surfactant is included in the animal litter in an amount between about 0.1 and about 3 wt% based upon the weight of the substrate particles.

20. The animal litter of claim 19, wherein the surfactant is included in the animal litter in an amount between about 0.25 and about 0.5 wt% based upon the weight of the substrate particles.

21. The animal litter of claim 1, further comprising an amount of one or more fragrances sufficient to mask or prevent odor in a litter box.

22. The animal litter of claim 1, further comprising one or more biocides.

23. The animal litter of claim 1, wherein said mass disintegrates upon immersion and agitation in water.

24. A process of making a particulate animal litter which comprises substrate particles and welan gum in an amount sufficient to cause, upon wetting, agglomeration of the animal litter into a mass of sufficient size and sufficient cohesive strength for physical removal from a litter box, said process comprising mixing the substrate particles with welan gum to form a coating of welan gum on at least a portion of a surface of the substrate particles.

25. The process of claim 24, further comprising wetting the substrate particles with a liquid prior to mixing the substrate particles and the welan gum.

26. The process of claim 25, wherein the liquid is polyethylene glycol.

27. The process of claim 26, wherein the polyethylene glycol is added to the substrate particles in an amount of from about 0.5 to about 12 wt% based upon the weight of the substrate particles.

28. The process of claim 27, wherein the polyethylene glycol is added to the substrate particles in an amount of from about 2 to about 10 wt% based upon the weight of the substrate particles.

29. The process of claim 24, wherein the welan gum is mixed with the substrate particles in an amount between about 0.25 and 5 wt% based upon the weight of the substrate particles.

30. The process of claim 29, wherein the welan gum is mixed with the substrate particles in an amount between about 1.0 and 2.0 wt% based upon the weight of the substrate particles.

31. The process of claim 24, wherein the welan gum comprises particles that pass through 200 mesh screen.

32. The process of claim 24, wherein the substrate particles comprise granules formed from materials obtained as coproducts from a wastepaper recycling process.

33. The process of claim 32, wherein the granules comprise:
- from about 50 to about 65 wt% organic materials including cellulose fibers;
- from about 15 to about 40 wt% kaolin clay;
- from about 5 to about 30 wt% calcium carbonate;
- from about 0.5 to about 4.0 wt% titanium dioxide; and
- less than 10 wt% water.

34. The process of claim 33, wherein the granules comprise:
- from about 55 to about 60 wt% organic materials including cellulose fibers;
- from about 20 to about 35 wt% kaolin clay;
- from about 10 to about 20 wt% calcium carbonate;
- from about 1 to about 3 wt% titanium dioxide; and
- less than 5 wt% water.

35. The process of claim 24, wherein the substrate particles comprise irregularly shaped generally spherical granules containing about 50-65% organic solids and about 35-50% inorganic solids, including kaolin clay, calcium carbonate and titanium dioxide, and having a substantially uniform density throughout.

36. The process of claim 35, wherein the granules have a particle size of about 250 to about 1190 µm.

37. The process of claim 35, wherein the organic solids comprise less than ten percent fibers that would be retained on a 100 mesh screen.

38. The process of claim 35, wherein the granules have a porous outer surface.

39. The process of claim 35, wherein the granules have a resistance to attrition of at least 95%.

40. The process of claim 35, wherein the granules have a bulk density of about 15 to about 40 lb./cu.ft.

41. The process of claim 24, further comprising mixing the substrate particles with a surfactant.

42. The process of claim 41, wherein the surfactant is added to the substrate particles in an amount between about 0.1 and about 3 wt% based upon the weight of the substrate particles.

43. The process of claim 42, wherein the surfactant is added to the substrate particles in an amount between about 0.25 and about 0.5 wt% based upon the weight of the substrate particles.

44. The process of claim 24, further comprising mixing the substrate particles with one or more fragrances.

45. The process of claim 24, further comprising mixing the substrate with one or more biocides.

46. The process of claim 24, wherein said mass disintegrates upon immersion in water.

47. The process of claim 24, further comprising wetting the substrate particles with a liquid; wherein said liquid is an emulsion formed by mixing a surfactant with a biocide and/or a fragrance to form a mixture and adding said mixture to polyethylene glycol.

48. The process of claim 24, further comprising wetting the substrate with a liquid; wherein said liquid is an emulsion formed by adding a surfactant to polyethylene glycol and then adding a biocide, a fragrance or both a biocide and a fragrance.
